# EUROPÄISCHE PATENTSCHRIFT

(11) **EP 1 048 526 B1**
(45) Veröffentlichungstag und Bekanntmachung des Hinweises auf die Patenterteilung: **17.09.2003**
(21) Anmeldenummer: 00106603.4
(22) Anmeldetag: 28.03.2000
(51) Int. Cl.: B60R 11/02

(54) **Für ein Kraftfahrzeug bestimmtes Einbaugerät**
Built-in apparatus intended for a vehicle
Appareil encastré destiné à un véhicule

(30) Priorität: 30.04.1999 DE 19919970; 06.08.1999 DE 19936712
(43) Veröffentlichungstag der Anmeldung: 02.11.2000
(73) Patentinhaber: Siemens Aktiengesellschaft, 80333 München (DE)
(72) Erfinder: Scheuer, Wilfried, 35075 Gladenbach (DE); Lauth, Stephan, 35614 Asslar (DE)

(56) Entgegenhaltungen:
- EP-A- 0 253 947
- EP-A- 0 566 128
- WO-A-97/25222
- US-A- 5 312 263

## Beschreibung

Die Erfindung betrifft ein für ein Kraftfahrzeug bestimmtes Einbaugerät, insbesondere ein Autoradio, mit einer zum Schutz gegen unbefugte Inbetriebnahme abnehmbaren Bedienfront, die zur Übertragung einer mechanischen Betätigungskraft auf einen an dem Einbaugerät angeordneten Schaltpunkt ausgeführt ist. Ein derartiges Einbaugerät, bei dem die Bedienfront einzelne Tasten aufweist, die mechanisch auf Tasten des Einbaugerätes einwirken, ist aus der EP 566 128 A bekannt.

Einbaugeräte mit abnehmbarer Bedienfront werden bei modernen Kraftfahrzeugen vielfach eingesetzt. Um einem möglichen Diebstahl vorzubeugen, ist das Einbaugerät mit der abnehmbaren und mitführbaren Bedienfront ausgestattet. Ohne die angeschlossene Bedienfront ist die Inbetriebnahme ausgeschlossen, so dass das Einbaugerät wesentlich an Wert verliert. Auf das Fehlen der Bedienfront kann zusätzlich durch ein auffälliges und bereits von außen sichtbares Warnlicht hingewiesen werden, so dass ein potentieller Dieb wirkungsvoll von einem Diebstahl abgehalten wird. Als nachteilig hat sich bei solchen Einbaugeräten herausgestellt, dass die abnehmbare Bedienfront besonders bei häufigem Gebrauch einem erhöhten Verschleiß ausgesetzt ist. Dabei werden insbesondere die empfindlichen elektrischen Kontaktstellen beschädigt oder derart verschmutzt, dass eine regelmäßige Pflege der Bedienfront erforderlich wird. Häufig wird die abgenommene Bedienfront nicht mit der erforderlichen Sorgfalt behandelt. Insbesondere das Herunterfallen der Bedienfront führt im Betrieb zu einer eingeschränkten Zuverlässigkeit der auf der Bedienfront angeordneten Bedienelemente, wobei vor allem Wackelkontakte ein häufiges Ärgernis darstellen.

Der Erfindung liegt daher das Problem zugrunde, ein Einbaugerät der eingangs genannten Art so zu gestalten, dass die Zuverlässigkeit des Einbaugerätes auch bei häufigem Entnehmen der Bedienfront nicht eingeschränkt wird. Dabei soll insbesondere das Risiko einer Beschädigung der Bedienfront durch unsachgemäße Handhabung reduziert werden.

Dieses Problem wird erfindungsgemäß dadurch gelöst, dass die Bedienfront zur Übertragung der Betätigungskraft beweglich gelagert ist. Hierdurch kann auf eine elektrische Kontaktierung der Bedienfront verzichtet werden. Daher sind Funktionsstörungen, die auf eine unsachgemäße Handhabung zurückzuführen sind, weitgehend ausgeschlossen. Zugleich ist die Bedienfront dadurch gegenüber Umwelteinflüssen, beispielsweise Feuchtigkeit, unempfindlich. Weiterhin lassen sich bei der Bedienfront dadurch reduzierte äußere Abmessungen realisieren, dass rückwärtige Kontaktstellen vermieden werden können. Dabei kann die Übertragung der mechanischen Betätigungskraft auf den Schaltpunkt sowohl unmittelbar, beispielsweise durch eine Schaltmatte, als auch mittelbar, z. B. durch eine an dem Schaltpunkt berührungslos induzierte Spannung erfolgen.

Die Bedienfront kann an ihrer dem Einbaugerät zugewandten Rückseite beweglich geführte Vorsprünge aufweisen, die in entsprechende Kontaktstellen des Einbaugerätes eingreifen und so auf den Schaltpunkt wirken. Dadurch, dass die erfindungsgemäße Bedienfront zur Übertragung der Betätigungskraft beweglich gelagert ist, kann auf bewegliche Bauelemente an der Bedienfront jedoch auch verzichtet werden, indem die Bedienfront zur Betätigung als Ganzes bewegt wird. Dabei entfallen insbesondere Führungen an der Bedienfront für Betätigungstasten, so dass eine mögliche Beschädigung einer Bewegungsmechanik der Bedienfront ausgeschlossen ist.

Hierzu ist es besonders günstig, wenn die Bedienfront als eine Schaltwippe ausgeführt ist. Hierdurch lässt sich eine einfache Kraftübertragung erreichen, wobei die Schaltwippe im wesentlichen durch ein einziges Bauteil gebildet ist.

Zugleich ist ein Verklemmen der Bedienfront aufgrund einer nachlässigen Positionierung weitgehend ausgeschlossen. Die Bedienfront ist hierzu beispielsweise mit einer Ausnehmung versehen, mit der die Bedienfront in einen an dem Einbaugerät angeordneten Vorsprung eingreift.

Eine andere besonders vorteilhafte Ausführungsform der Erfindung ist auch dadurch gegeben, dass die Bedienfront zur Übertragung der mechanischen Betätigungskraft auf einen mit dem Schaltpunkt verbundenen Stößel ausgeführt ist. Hierdurch wird es möglich, die Bedienfront mit einer Vielzahl von Betätigungsflächen auszustatten, die jeweils mittels des Stößels auf einen eigenen Schaltpunkt wirken. Daher können an der Bedienfront verschiedene Funktionen sinnvoll zusammengefasst und so die Bedienung erleichtert werden.

Eine andere besonders vorteilhafte Weiterbildung der Erfindung ist auch dann gegeben, wenn die Bedienfront eine zum formschlüssigen Einsetzen des Stößels ausgeführte Aufnahme hat. Die Aufnahme weist hierzu auf den Stößel abgestimmte Abmessungen auf, die somit den Einsatz einer anderen Bedienfront ausschließen. Die Möglichkeit der Inbetriebnahme ist daher auf die ursprüngliche Bedienfront beschränkt, so dass der Wert des Einbaugerätes ohne die Bedienfront für einen potentiellen Dieb erheblich reduziert ist.

Besonders nützlich ist es dabei auch, wenn die Bedienfront eine Codierung aufweist. Hierdurch ist die Inbetriebnahme des Einbaugerätes zusätzlich von der Codierung abhängig, die zu diesem Zweck beispielsweise durch ein gerätespezifisches, magnetisches Feld gegeben ist, welches durch einen entsprechenden Sensor des Einbaugerätes identifizierbar ist.

Eine besonders vorteilhafte Ausgestaltung der Erfindung ist auch dadurch gegeben, dass die Bedienfront beleuchtbar ist. Hierdurch wird die problemlose Bedienung des Einbaugerätes auch bei unzureichender Umgebungshelligkeit möglich. Dabei erfolgt die Beleuchtung beispielsweise durch eine Hintergrundbeleuchtung eines Symboles oder eines sonstigen, der Funktion der Bedienfront zugeordneten Zeichens.

Die Bedienfront kann hierzu eine Kontaktstelle zur elektrischen Energieversorgung einer an der Bedienfront angeordneten Lichtquelle aufweisen. Eine besonders einfache Ausführungsform der Erfindung ist hingegen dadurch gegeben, dass die Bedienfront eine mit einem Lichtleiter verbundene Lichteinkoppelstelle zur Beleuchtung mittels einer an dem Einbaugerät angeordneten Lichtquelle hat. Hierdurch kann auf eine elektrische Kontaktierung der Bedienfront gänzlich verzichtet und die an dem Einbaugerät vorhandene Lichtquelle zugleich zur Beleuchtung der Bedienfront genutzt werden. Die Lichteinkoppelstelle kann hierzu beispielsweise in eine Lagerstelle der hierbei beweglich angeordneten Bedienfront integriert werden, wobei zugleich eine ausreichende Lichteinkopplung unabhängig von der Betätigungsposition der Bedienfront erreicht werden kann.

Eine besonders vorteilhafte Ausführungsform der Erfindung ist dadurch erreicht, dass die Bedienfront mittels einer manuell betätigbaren Rastverbindung in ihrer Position fixiert ist. Hierdurch kann die Bedienfront einerseits schnell und mühelos in ihrer Gebrauchsposition fixiert werden, andererseits ist zum Entfernen der Bedienfront lediglich eine Betätigung der Rastverbindung erforderlich. Die Rastverbindung kann hierzu beispielsweise einen verschiebbaren und gegen die Rückstellkraft einer Feder beweglichen Riegel aufweisen und mittels einer Druckoder Schiebebetätigung auslösbar sein.

Eine besonders günstige Weiterbildung der Erfindung ist dadurch gegeben, dass das Einbaugerät eine die Positionierung der Bedienfront erleichternde Führung aufweist, wobei die Bedienfront eine Ausnehmung und das Einbaugerät einen in diese eingreifenden Vorsprung aufweist. Die Handhabung der Bedienfront wird dadurch erheblich erleichtert. Insbesondere kann die Führung eine Abschrägung oder Fase aufweisen, mit der die Bedienfront in die korrekte Position gelenkt wird. Die Bedienfront kann zur Fixierung lediglich einseitig gegen das Einbaugerät angelegt und anschließend durch eine Schwenkbewegung, bei der die Führung zugleich ein mögliches Abgleiten verhindert, fixiert werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer perspektivischen Darstellung in
- Fig. 1: eine Vorderansicht eines erfindungsgemäßen Einbaugerätes und einer Bedienfront,
- Fig. 2: eine rückwärtige Ansicht der in Figur 1 gezeigten Bedienfront und
- Fig. 3: eine Explosionsdarstellung der Bedienfront.

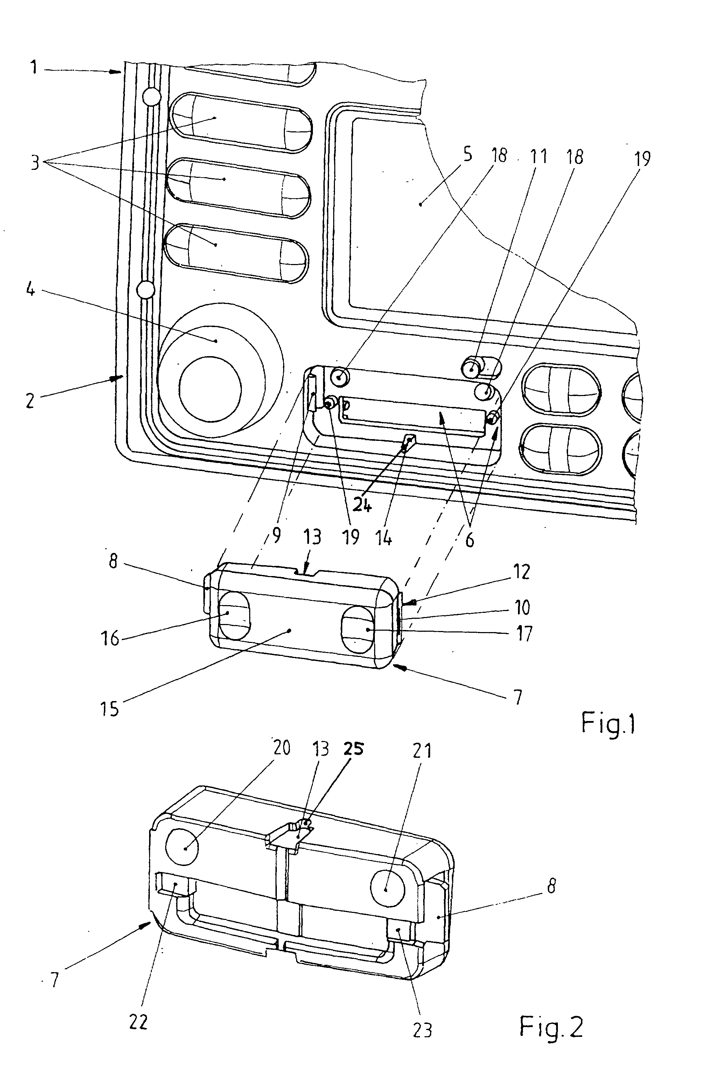

Figur 1 zeigt ein als Autoradio ausgeführtes Einbaugerät 1 in einer perspektivischen Ansicht. Das Einbaugerät 1 hat eine Vorderseite 2 mit mehreren Betätigungselementen 3, sowie einen Drehschalter 4 und ein Display 5. Das Einbaugerät 1 weist weiterhin eine Einführöffnung 6 zum Einführen einer nicht dargestellten Speicherkarte auf. Diese Einführöffnung 6 wird zugleich beim Einsetzen einer Bedienfront 7 von dieser verschlossen. Die Bedienfront 7 hat hierzu einen Vorsprung 8, der zur Fixierung der Bedienfront 7 zunächst eine Rastnase 9 des Einbaugerätes 1 hintergreift. Anschließend wird eine dem Vorsprung 8 gegenüberliegende Rastfläche 10 fixiert. Hierzu greift ein mit einem als Schieber ausgeführten Betätigungselement 11 verbundenes, nicht dargestelltes Rastmittel in die Rastfläche 10 ein. Die Rastfläche 10 und das nicht dargestellte Rastmittel bilden zusammen eine Rastverbindung 12. Eine als Schwenkfläche ausgeführte Ausnehmung 13 der Bedienfront 7, in die ein keilförmiger Vorsprung 14 des Einbaugerätes 1 eingreift, lagert die Bedienfront 7 in Form einer Wippe im Einbaugerät 1. Mit der Bedienfront 7 einteilig verbunden ist ein Bedienelement 15 mit zwei ergonomisch ausgeformten Druckflächen 16, 17. Eine Druckbetätigung der Druckfläche 16, 17 wird mittels der hierzu als Wipptaste ausgeführten Bedienfront 7 auf jeweils einen Schaltpunkt 18 des Einbaugerätes 1 übertragen. Die Bedienfront 7 wird dabei um eine Anlagefläche zwischen einem vorderen Ende 24 des keilförmigen Vorsprunges 14 . und einem hinteren Ende 25 mit einer in Figur 2 näher dargestellten, halbkreisförmigen Ausnehmung 13 verschwenkt.

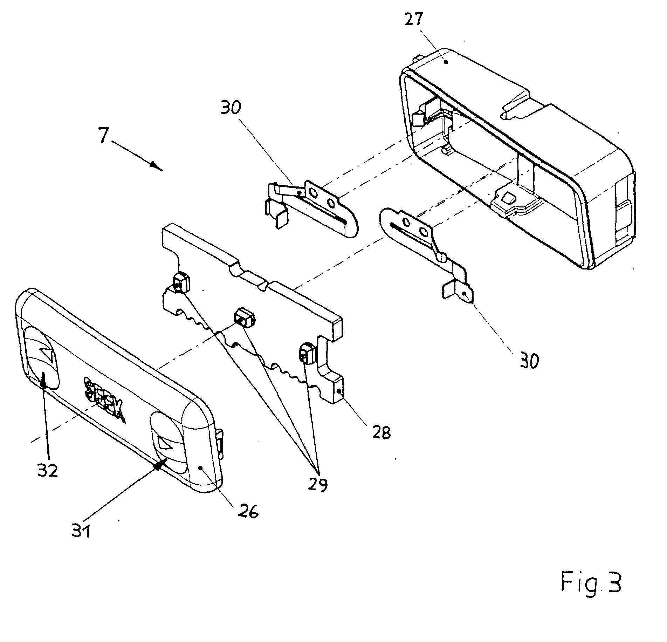

Die elektrische Kontaktierung erfolgt bei der Betätigung der Bedienfront 7 ausschließlich im Inneren des Einbaugerätes 1, so dass eine Funktionsstörung, beispielsweise ein Kurzschluss innerhalb der Bedienfront 7 durch eine unsachgemäße Handhabung, verhindert werden kann. Zwei Kontaktstifte 19 ermöglichen ferner auch die unmittelbare elektrische Kontaktierung der Bedienfront 7 mit dem Einbaugerät 1, um beispielsweise eine in Figur 3 dargestellte Lichtquelle oder sonstige Nebenfunktionen mit elektrischer Energie zu versorgen.

Figur 2 zeigt eine perspektivische und vergrößerte Darstellung der Rückseite der in Figur 1 gezeigten Bedienfront 7. Zu erkennen ist der Vorsprung 8 und die Ausnehmung 13, welche zur Fixierung der Bedienfront 7 eine die Schwenkbewegung erleichternde keilförmige Formgebung aufweist. Weiterhin hat die Bedienfront 7 zwei Aufnahmen 20, 21, in die im Betriebszustand jeweils einer der in Figur 1 gezeigten Schaltpunkte 18 mit einem Stößel eingreift und so eine Übertragung der Betätigungskraft ermöglicht. Die Bedienfront 7 weist weiterhin zwei Kontaktflächen 22, 23 für die in Figur 1 gezeigten Kontaktstifte 19 auf. Durch die derart zu erreichende elektrische Kontaktierung ist es beispielsweise zugleich möglich, die Bedienfront 7 mit einer individuellen Codierungzu versehen, um die Inbetriebnahme des Einbaugerätes 1 ohne die zugehörige Bedienfront 7 zuverlässig auszuschließen und so einen weiter verbesserten Diebstahlschutz des Einbaugerätes 1 zu erreichen.

In Figur 3 ist die Bedienfront 7 in einer Explosionsdarstellung gezeigt. Ein nach vorne hin offenes Gehäuse 27 der Bedienfront 7 nimmt eine mit drei Lichtquellen 29 versehene Leiterplatte 28 auf. Zur elektrischen Kontaktierung der auf der Leiterplatte 28 angeordneten, als LEDs. ausgebildeten Lichtquellen 29 sind Kontaktfedern 30 vorgesehen, die die Leiterplatte 28 mit den zwei Kontaktflächen 22, 23 (Figur 2) der Bedienfront 7 verbinden. An seiner einem Bediener zugewandten Vorderseite wird das Gehäuse 27 mit einer Blende 26 verschlossen, wobei die Blende 26 in das Gehäuse 27 eingerastet wird. Wie der Aufschrift "SEEK" der Blende 26 zu entnehmen, dient die Bedienfront 7 der Betätigung einer Sendersuchfunktion des als Autoradio ausgebildeten Einbaugerätes 1. Die Blende 26 weist weiterhin mit einer Tastfläche 31 für eine Aufwärts- und mit einer dieser Tastfläche 31 gegenüberliegenden Tastfläche 32 für eine Abwärts-Suchfunktion die Druckflächen 16, 17 (Figur 1) auf. Um die Bedienung des Einbaugerätes bei Umgebungsdunkelheit zu vereinfachen, sind die Tastflächen 31, 32 sowie die Aufschrift "SEEK" der Blende 26 mit Hilfe der Lichtquellen 29 beleuchtbar.

## Patentansprüche

1. Ein für ein Kraftfahrzeug bestimmtes Einbaugerät, insbesondere ein Autoradio, mit einer zum Schutz gegen unbefugte Inbetriebnahme abnehmbaren Bedienfront, die zur Übertragung einer mechanischen Betätigungskraft auf einen an dem Einbaugerät (1) angeordneten Schaltpunkt (18) ausgeführt ist, **dadurch gekennzeichnet, dass** die Bedienfront (7) zur Übertragung der Betätigungskraft beweglich gelagert ist.

2. Einbaugerät nach Anspruch 1, **dadurch gekennzeichnet, dass** die Bedienfront (7) als eine Schaltwippe ausgeführt ist.

3. Einbaugerät nach einem der vorhergehenden Ansprüche, **dadurch gekennzeichnet, dass** die Bedienfront (7) zur Übertragung der mechanischen Betätigungskraft auf einen mit dem Schaltpunkt (18) verbundenen Stößel ausgeführt ist.

4. Einbaugerät nach einem der vorhergehenden Ansprüche, **dadurch gekennzeichnet, dass** die Bedienfront (7) eine zum formschlüssigen Einsetzen des Stößels ausgeführte Aufnahme (20, 21) hat.

5. Einbaugerät nach einem der vorhergehenden Ansprüche, **dadurch gekennzeichnet, dass** die Bedienfront (7) eine Codierung aufweist.

6. Einbaugerät nach einem der vorhergehenden Ansprüche, **dadurch gekennzeichnet, dass** die Bedienfront (7) beleuchtbar ist.

7. Einbaugerät nach einem der vorhergehenden Ansprüche, **dadurch gekennzeichnet, dass** die Bedienfront (7) eine mit einem Lichtleiter verbundene Lichteinkoppelstelle zur Beleuchtung mittels einer an dem Einbaugerät (1) angeordneten Lichtquelle hat.

8. Einbaugerät nach einem der vorhergehenden Ansprüche, **dadurch gekennzeichnet, dass** die Bedienfront (7) mittels einer manuell betätigbaren Rastverbindung (12) in ihrer Position fixiert ist.

9. Einbaugerät nach einem der vorhergehenden Ansprüche, **dadurch gekennzeichnet, dass** das Einbaugerät (1) eine die Positionierung der Bedienfront (7) erleichternde Führung aufweist, wobei die Bedienfront (7) eine Ausnehmung (13) und das Einbaugerät (1) einen in diese eingreifenden Vorsprung (14) aufweist.

## Claims

1. Built-in appliance, in particular a car radio, intended for a motor vehicle, with an operating front capable of being removed for protection against unauthorized operation, which is designed for transmitting a mechanical actuating force to a switching point (18) arranged on the built-in appliance (1), **characterized in that** the operating front (7) is mounted movably for the purpose of transmitting the actuating force.

2. Built-in appliance according to Claim 1, **characterized in that** the operating front (7) is designed as a switching rocker.

3. Built-in appliance according to one of the preceding claims, **characterized in that** the operating front (7) is designed for transmitting the mechanical actuating force to a tappet connected to the switching point (18).

4. Built-in appliance according to one of the preceding claims, **characterized in that** the operating front (7) has a receptacle (20, 21) designed for the positive insertion of the tappet.

5. Built-in appliance according to one of the preceding claims, **characterized in that** the operating front (7) has a coding.

6. Built-in appliance according to one of the preceding claims, **characterized in that** the operating front (7) is capable of being illuminated.

7. Built-in appliance according to one of the preceding claims, **characterized in that** the operating front (7) has a light input point, connected to a light guide, for illumination by means of a light source arranged on the built-in appliance (1).

8. Built-in appliance according to one of the preceding claims, **characterized in that** the operating front (7) is fixed in its position by means of a manually actuable catch connection (12).

9. Built-in appliance according to one of the preceding claims, **characterized in that** the built-in appliance (1) has a guide making it easier to position the operating front (7), the operating front (7) having a recess (13) and the built-in appliance (1) having a projection (14) engaging into the latter.

## Revendications

1. Appareil encastré destiné à un véhicule, et plus particulièrement une autoradio comprenant un tableau de commande détachable pour la protection contre une mise en service non autorisée, lequel est réalisé de manière à transmettre une force d'actionnement mécanique à un point de commande (18) localisé sur l'appareil encastré (1), **caractérisé en ce que** le tableau de commande (7) est articulé aux fins de la transmission de la force d'actionnement.

2. Appareil encastré selon la revendication 1, **caractérisé en ce que** le tableau de commande (7) est réalisé comme une bascule de commande.

3. Appareil encastré selon l'une des revendications précédentes, **caractérisé en ce que** le tableau de commande (7) est réalisé de manière à transmettre la force d'actionnement mécanique à un poussoir relié au point de commande (18).

4. Appareil encastré selon l'une des revendications précédentes, **caractérisé en ce que** le tableau de commande (7) présente un logement (20, 21) tel que le poussoir qui s'y engage présente la forme conjuguée dudit logement (20,21).

5. Appareil encastré selon l'une des revendications précédentes, **caractérisé en ce que** le tableau de commande (7) présente un codage.

6. Appareil encastré selon l'une des revendications précédentes, **caractérisé en ce que** le tableau de commande (7) peut être éclairé.

7. Appareil encastré selon l'une des revendications précédentes, **caractérisé en ce que** le tableau de commande (7) présente un point d'injection de lumière relié à un guide de lumière, ledit point servant à l'éclairage au moyen d'une source de lumière localisée sur l'appareil encastré (1).

8. Appareil encastré selon l'une des revendications précédentes, **caractérisé en ce que** le tableau de commande (7) est fixé dans sa position au moyen d'un assemblage de blocage (12) actionnable manuellement.

9. Appareil encastré selon l'une des revendications précédentes, **caractérisé en ce que** l'appareil encastré (1) présente un dispositif de guidage facilitant le positionnement du tableau de commande (7), ledit tableau de commande (7) présentant un creux (13) et l'appareil encastré (1), une saillie (14) qui s'engage dans celui-ci.
